# DEMANDE DE BREVET EUROPEEN

(11) **EP 4 717 949 A1**
(43) Date de publication de la demande: **01.04.2026**
(21) Numéro de dépôt: 25205014.1
(22) Date de dépôt: 26.09.2025
(51) Int. Cl.: F16K 1/52, F16K 31/04, F16K 37/00

(54) **PROCEDE DE PARAMETRAGE D'UNE VANNE THERMOSTATIQUE**

(30) Priorité: 30.09.2024 FR 2410456
(71) Demandeur: DELTA DORE, 35270 Bonnemain (FR)
(72) Inventeur: LAMBERT, David, 35270 BONNEMAIN (FR)
(74) Mandataire: Cabinet Le Guen Maillet

(57) **Abrégé**

La présente invention concerne un procédé de paramétrage d'une tête thermostatique motorisée d'une vanne thermostatique comportant un corps de vanne, la tête thermostatique motorisée provoquant un déplacement d'un élément mobile du corps de vanne laissant circuler en totalité ou en partie ou ne laissant pas circuler un fluide dans le corps de vanne. Selon l'invention :
- on commande (E405) la rotation du moteur pas à pas pour provoquer le déplacement de l'élément mobile du corps de vanne dans la totalité de la course de l'élément mobile dans le corps de vanne,
- on mesure à chaque demi pas la force contre électro motrice,
- on détecte (E406) à partir des mesures une butée qui correspond à une fermeture totale du conduit et ne laissant pas circuler de fluide dans le corps de vanne,
- on détecte (E411) à partir des mesures une plage d'ouverture du conduit du corps de vanne,
- on utilise la butée et la plage d'ouverture pour commander l'élément mobile.

## Description

### DOMAINE TECHNIQUE

La présente invention concerne un procédé de paramétrage d'une vanne thermostatique motorisée pour le contrôle et la régulation d'une installation de chauffage domestique à circulation de fluide.

### ETAT DE LA TECHNIQUE ANTERIEURE

Une vanne thermostatique est une vanne qui permet de contrôler le débit de fluide dans un radiateur. Classiquement les vannes thermostatiques comportent une sonde thermosensible, qui se dilate et se contracte en fonction de la température ambiante et qui actionne un système mécanique, lequel laisse passer une quantité appropriée de fluide. Une vanne thermostatique est aussi connue sous la dénomination de robinet thermostatique.

Une vanne thermostatique est constituée d'un corps de vanne et d'une tête thermostatique. La tête thermostatique permet de régler une température souhaitée dans une pièce d'un bâtiment en déplaçant un élément mobile compris dans le corps de vanne qui module la quantité de fluide circulant dans le radiateur.

Il existe trois types de têtes thermostatiques, les têtes thermostatiques mécaniques, les têtes thermostatiques électroniques et les têtes thermostatiques motorisées et connectées.

Les têtes thermostatiques mécaniques sont les têtes thermostatiques les plus classiques, avec une graduation visible allant de 1 à 5 et d'un mode hors gel, elles ne sont pas programmables. Elles sont réglables manuellement, uniquement.

Les têtes thermostatiques électroniques se contrôlent facilement, et ont les mêmes avantages que les mécaniques, mais bénéficient d'un affichage et d'un contrôle digital au demi-degré près. Les têtes thermostatiques électroniques sont programmables, qu'il s'agisse de programmes horaires ou hebdomadaires. Elles se contrôlent directement sur la vanne ou via le thermostat d'ambiance.

Les têtes thermostatiques motorisées sont la nouvelle version des têtes thermostatiques et fonctionnent en connexion à un réseau Internet et parfois avec un thermostat connecté.

Il existe sur le marché de nombreux corps de vannes aux caractéristiques techniques largement différentes.

Il est à remarquer ici que les corps de vannes de par leur structure, ont des linéarités différentes.

Parfois, les corps de vannes ont un point d'ouverture différent. Le point d'ouverture est le point à partir duquel le fluide circule à travers le corps de vanne et donc le radiateur.

Il est possible d'associer à ces corps de vannes, des têtes thermostatiques pouvant être motorisées et connectées. Ces têtes thermostatiques intègrent une régulation permettant de contrôler la température de la pièce avec une consigne fixée par l'utilisateur. La régulation de la tête thermostatique a une action sur le corps de vanne afin de faire circuler un certain débit dans le radiateur. Or, les corps de vannes ont des linéarités différentes selon la marque ou le modèle.

Ainsi pour une même consigne de température et donc une même action du moteur de la tête thermostatique sur le corps de vanne, il est possible d'obtenir des débits largement différents et générer des instabilités dans la régulation de la température.

Ces instabilités se traduisent notamment par une surconsommation d'énergie due aux mouvements intempestifs du moteur. Ce qui est particulièrement problématique lorsque la tête thermostatique motorisée est alimentée par l'intermédiaire d'une pile.

Il est notamment souhaitable de fournir une solution qui permette de garantir des débits uniformes quel que soit le type de corps de vanne.

### EXPOSE DE L'INVENTION

Il est proposé un procédé de paramétrage d'une tête thermostatique motorisée d'une vanne thermostatique pour le contrôle et la régulation d'une installation de chauffage domestique à circulation de fluide dans une pièce d'un bâtiment, la vanne thermostatique comportant un corps de vanne et la tête thermostatique motorisée, la tête thermostatique motorisée comportant un moteur pas à pas pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, caractérisé en ce que le procédé comporte les étapes de :
- commande de la rotation du moteur pas à pas d'un nombre de demi pas prédéterminé pour provoquer le déplacement de l'élément mobile du corps de vanne dans la totalité de la course de l'élément mobile dans le corps de vanne,
- mesure à chaque demi pas de la force contre électro motrice du moteur pas à pas,
- détection à partir des mesures de la force contre électro motrice du moteur pas à pas d'une butée qui correspond à une fermeture totale du conduit et ne laissant pas circuler de fluide dans le corps de vanne,
- détection à partir des mesures de la force contre électro motrice du moteur pas à pas d'une plage d'ouverture du conduit du corps de vanne,
- utilisation de la butée qui correspond à une fermeture totale du conduit et de la plage d'ouverture du conduit du corps de vanne pour commander l'élément mobile.

L'invention concerne aussi un dispositif de paramétrage d'une tête thermostatique motorisée d'une vanne thermostatique pour le contrôle et la régulation d'une installation de chauffage domestique à circulation de fluide dans une pièce d'un bâtiment, la vanne thermostatique comportant un corps de vanne et la tête thermostatique motorisée, la tête thermostatique motorisée comportant un moteur pas à pas pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, caractérisé en ce que le dispositif comporte :
- des moyens de commande de la rotation du moteur pas à pas d'un nombre de demi pas prédéterminé pour provoquer le déplacement de l'élément mobile du corps de vanne dans la totalité de la course de l'élément mobile dans le corps de vanne,
- des moyens de mesure à chaque demi pas de la force contre électro motrice du moteur pas à pas,
- des moyens de détection à partir des mesures de la force contre électro motrice du moteur pas à pas d'une butée qui correspond à une fermeture totale du conduit et ne laissant pas circuler de fluide dans le corps de vanne,
- des moyens de détection à partir des mesures de la force contre électro motrice du moteur pas à pas d'une plage d'ouverture du conduit du corps de vanne,
- des moyens d'utilisation de la butée qui correspond à une fermeture totale du conduit et de la plage d'ouverture du conduit du corps de vanne pour commander l'élément mobile.

Ainsi, la présente invention permet d'optimiser la commande du moteur pour que celui-ci ne fonctionne que dans la plage d'ouverture du conduit du corps de vanne et ainsi de réduire la consommation électrique et prolonger la durée de vie de la pile fournissant l'alimentation en énergie électrique.

Selon un mode de réalisation particulier, le procédé comporte en outre les étapes de :
- commande de la rotation du moteur pas à pas d'un nombre de demi pas prédéterminé pour provoquer le déplacement du piston à une position dans laquelle le piston est à une position dans laquelle le piston est totalement rentré dans la tête thermostatique motorisée,
- détection à partir des mesures de la force contre électro motrice du moteur pas à pas d'une butée qui correspond à la position dans laquelle le piston est à une position dans laquelle le piston est totalement rentré dans la tête thermostatique motorisée.

Selon un mode de réalisation particulier, les butées sont détectées en comparant la différence entre la moyenne des mesures de la force contre électro motrice du moteur pas à pas pendant un demi pas et la moyenne des mesures de la force contre électro motrice du moteur pas à pas pendant un demi pas précédent à un premier seuil prédéterminé.

Ainsi, la présente invention permet de détecter le point de contact du piston avec l'élément mobile.

Selon un mode de réalisation particulier, les butées sont détectées en comparant la différence entre la moyenne des mesures de la force contre électro motrice du moteur pas à pas pendant un demi pas et la moyenne des mesures de la force contre électro motrice du moteur pas à pas pendant un demi pas précédent à un premier seuil prédéterminé.

Ainsi, la détection des butées est précise car elle est basée sur une détection d'une variation rapide de la force contre électromotrice entre deux demi pas.

Selon un mode de réalisation particulier, la plage d'ouverture du conduit du corps de vanne est détectée en comparant la valeur absolue de la différence entre une moyenne glissante de mesures de la force contre électro motrice du moteur pas à pas pendant un nombre donné de demi pas et une moyenne de mesures de la force contre électro motrice du moteur pas à pas pendant un demi pas à un second seuil prédéterminé.

Ainsi, il est possible de détecter une variation lente de la force contre électromotrice et de permettre une détection de la plage d'ouverture de différents types de corps de vannes.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé réalisé par une passerelle internet, tel que mentionné ci-dessus, lorsque ledit programme est exécuté par le processeur. L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'agencement matériel d'une vanne thermostatique comprenant la présente invention ;
[Fig. 2] illustre schématiquement un exemple d'agencement matériel d'un contrôleur compris dans une tête thermostatique motorisée selon la présente invention ;
[Fig. 3] illustre un exemple de mesures de la force contre électromotrice d'un moteur pas à pas au cours du déplacement d'un piston configuré pour déplacer un élément mobile d'un corps de vanne ;
[Fig. 4] illustre schématiquement un exemple d'algorithme exécuté par un contrôleur pour calibrer un corps de vanne selon la présente invention ;
[Fig. 5] illustre schématiquement un exemple d'algorithme exécuté par un contrôleur pour détecter des butées selon la présente invention;
[Fig. 6] illustre schématiquement un exemple d'algorithme exécuté par un contrôleur pour détecter la plage d'ouverture du conduit du corps de vanne selon la présente invention.

### EXPOSE DETAILLE DE MODES DE REALISATION

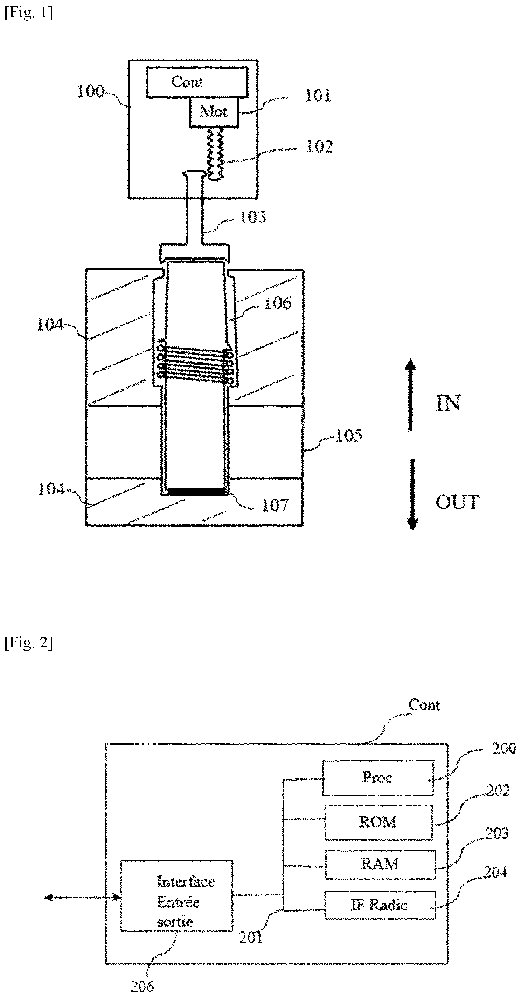

La **Fig. 1** illustre schématiquement un exemple d'agencement matériel d'une vanne thermostatique comprenant la présente invention.

La tête thermostatique motorisée 100 comporte un contrôleur Cont, un moteur pas à pas 101, des moyens de transmission 102 et un piston 103.

Le corps de vanne 104 comporte un élément mobile 106 actionné par le piston 103 dont le déplacement module la quantité de fluide circulant dans un conduit 105 relié à un radiateur non présenté dans la Fig. 1.

Le corps de vanne 104 comporte un joint 107.

La **Fig. 2** illustre schématiquement un exemple d'agencement matériel d'un contrôleur compris dans une tête thermostatique motorisée selon la présente invention.

Le contrôleur Cont comporte, reliés par un bus de communication 201 : un processeur Proc 200 ; une mémoire vive RAM (« Random Access Memory » en anglais) 203 ; une mémoire morte ROM (« Read Only Memory » en anglais) 202 ou une mémoire Flash ; une interface radio 204 et une interface entrée/sortie 206.

L'interface de l'entrée/sortie 206 permet de commander la rotation d'un moteur compris dans la tête thermostatique, d'obtenir une mesure de la force contre électro motrice du moteur.

Le processeur Proc 200 est capable d'exécuter des instructions chargées dans la mémoire ou d'un réseau de communication. Lors de la mise sous tension du contrôleur Cont, le processeur Proc 200 est capable de lire dans la mémoire RAM 203 des instructions et de les exécuter. Ces instructions forment un programme d'ordinateur causant la mise en œuvre, par le processeur Proc 200, de tout ou partie des comportements, algorithmes et étapes décrits ici.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le contrôleur Cont comporte de la circuiterie électronique adaptée et configurée pour implémenter les comportements, algorithmes et étapes décrits ici.

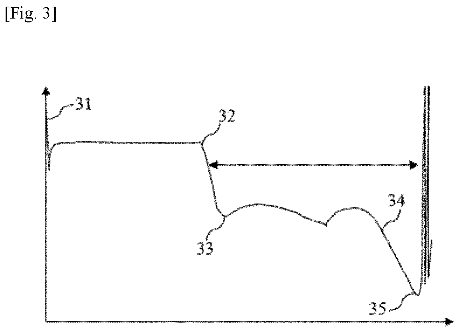

La **Fig. 3** illustre un exemple de mesures de la force contre électromotrice d'un moteur pas à pas au cours du déplacement d'un piston configuré pour déplacer un élément mobile d'un corps de vanne.

Le moteur est par exemple un moteur pas à pas bipolaire qui comporte quatre fils, deux pour une phase notée A et 2 pour une phase notée B dans un mode dans lequel lorsque la phase A est activée la phase B est en haute impédance et lorsque la phase B est activée la phase A est en haute impédance. La mesure de la force contre électromotrice est effectuée sur une phase en haute impédance.

Le point noté 31 appelé première butée est appelé par la suite butée IN qui correspond à une position dans laquelle le piston 103 est totalement rentré dans la tête thermostatique motorisée 100. Un saut dans la valeur de la force contre électromotrice entre le premier pas et les suivants apparait.

Entre le point 31 et le point 32, le piston se déplace dans le sens OUT mais n'est pas en contact avec l'élément mobile 106 du corps de vanne 104.

Au point 32 le piston entre en contact avec l'élément mobile du corps de vanne 104.

Entre les points 32 et 33, une zone de contrainte apparait lors du contact du piston avec l'élément mobile du corps de vanne 104.

Le point 33 représente le début de l'ouverture du conduit 105 du corps de vanne 104. Entre les points 33 et 35 est localisée la plage d'ouverture du conduit 105 du corps de vanne 104.

Le point 35 représente le début de la compression du joint 107 du corps de vanne 104, et le point 35 est appelé seconde butée ou butée OUT qui correspond à la fermeture totale du conduit 105.

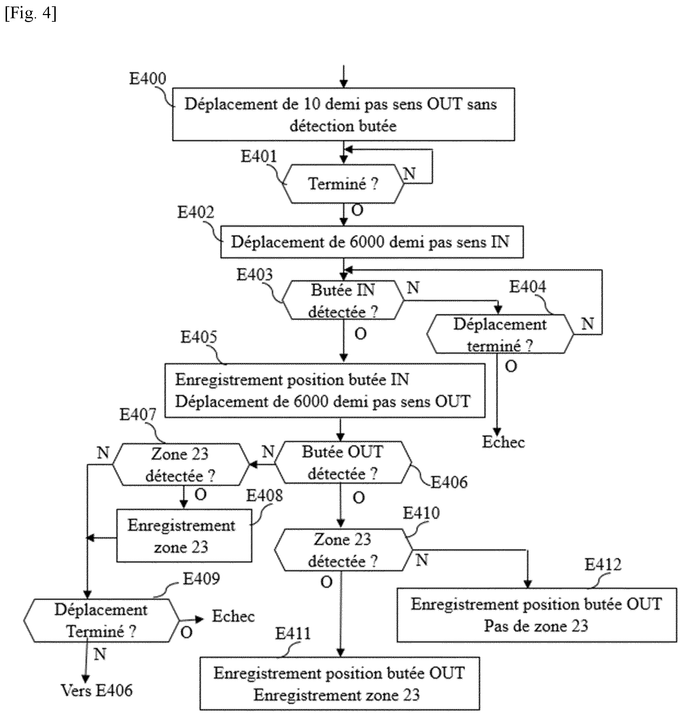

La Fig. 4 illustre schématiquement un exemple d'algorithme exécuté par un contrôleur pour calibrer un corps de vanne selon la présente invention.

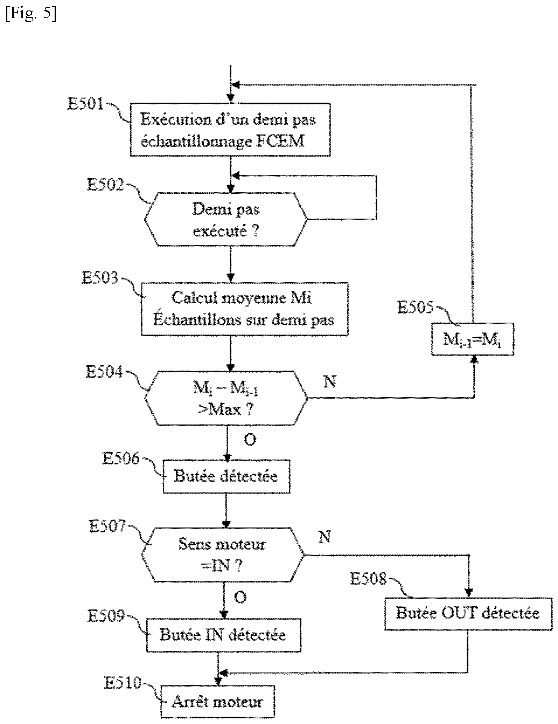

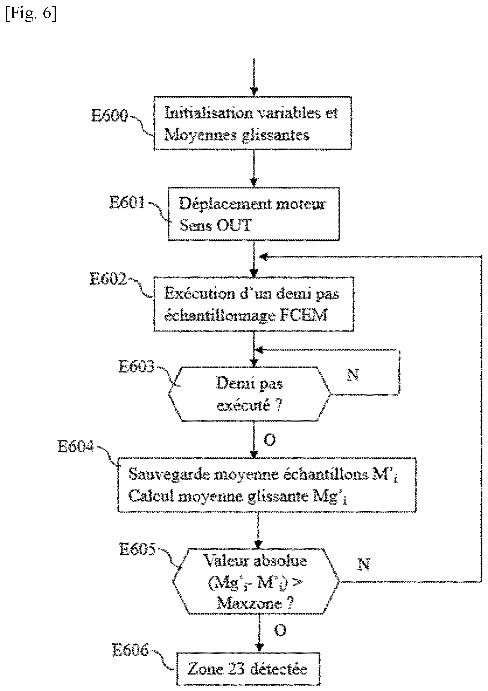

Le présent algorithme est par exemple exécuté par le contrôleur Cont. Lorsque le présent algorithme est activé, les algorithmes tels que décrits en référence aux Figs. 5 et 6 sont activés.

A l'étape E400, le contrôleur Cont commande la rotation du moteur Mot d'un nombre de pas, par exemple 10, dans le sens OUT pour se situer dans une zone qui ne correspond pas à une butée et ainsi obtenir au moins un échantillonnage du signal représentatif de la force contre électromotrice pendant l'exécution du demi pas qui ne correspond pas à une butée. A l'étape E401, le contrôleur Cont vérifie si la rotation du moteur Mot de 10 pas dans le sens OUT est terminée.

Dans l'affirmative, le contrôleur Cont passe à l'étape E402. Dans la négative, le contrôleur Cont retourne à l'étape E401.

A l'étape E402, le contrôleur Cont commande la rotation du moteur Mot dans le sens IN d'un nombre de demi pas, par exemple 6000 si la course de l'élément mobile est de 5mm . A l'étape E403, le contrôleur Cont vérifie si une butée IN a été détectée par l'algorithme décrit en référence à la Fig. 5.

Dans l'affirmative, le contrôleur Cont passe à l'étape E405. Dans la négative, le contrôleur Cont passe à l'étape E404.

A l'étape E404, le contrôleur Cont vérifie si la rotation du moteur Mot de 6000 demi pas dans le sens IN est terminée.

Dans l'affirmative, le contrôleur Cont interrompt le présent algorithme, le calibrage a échoué. Dans la négative, le contrôleur Cont retourne à l'étape E403.

A l'étape E405, le contrôleur Cont enregistre la position de la butée IN et commande la rotation du moteur Mot de 6000 demi pas dans le sens OUT.

A l'étape E406, le contrôleur Cont vérifie si une butée OUT a été détectée par l'algorithme décrit en référence à la Fig. 5.

Dans l'affirmative, le contrôleur Cont passe à l'étape E410. Dans la négative, le contrôleur Cont passe à l'étape E407.

A l'étape E407, le contrôleur Cont vérifie si la plage d'ouverture du conduit 105 du corps de vanne 104 a été détectée par l'algorithme tel que décrit en Fig. 6. La plage d'ouverture est appelée zone 23.

Dans l'affirmative, le contrôleur Cont passe à l'étape E408. Dans la négative, le contrôleur Cont passe à l'étape E409.

A l'étape E408, le contrôleur Cont mémorise les positions minimales et maximales de la zone 23 et passe à l'étape E509.

A l'étape E409, le contrôleur Cont vérifie si la rotation du moteur Mot de 6000 demi pas dans le sens OUT est terminée.

Dans l'affirmative, le contrôleur Cont interrompt le présent algorithme et commande la génération d'un message ou signal par l'intermédiaire d'une interface homme machine indiquant l'échec du calibrage. Dans la négative, le contrôleur Cont retourne à l'étape E406.

A l'étape E410, le contrôleur Cont vérifie si la plage d'ouverture du conduit 105 du corps de vanne 104 a été détectée par l'algorithme tel que décrit en Fig. 6.

Dans l'affirmative, le contrôleur Cont passe à l'étape E411. Dans la négative, le contrôleur Cont passe à l'étape E412.

A l'étape E411, le contrôleur Cont mémorise les positions minimales et maximales de la zone 23 ainsi que la position de la butée OUT, interrompt le présent algorithme et utilise les positions minimales et maximales de la zone 23 ainsi que la position de la butée OUT comme plage de commande du moteur 101.

A l'étape E412, le contrôleur Cont mémorise la position de la butée OUT et interrompt le présent algorithme.

La Fig. 5 illustre schématiquement un exemple d'algorithme exécuté par un contrôleur selon la présente invention pour détecter des butées.

Le présent algorithme est par exemple exécuté par le contrôleur Cont à partir de l'étape E402 de la Fig. 4.

Cet algorithme permet de détecter les première et seconde butées.

A l'étape E501, le contrôleur Cont commande l'échantillonnage du signal représentatif de la force contre électromotrice pendant l'exécution du demi pas.

A l'étape suivante E502, le contrôleur Cont vérifie si le demi pas a été exécuté. Dans l'affirmative, le contrôleur Cont passe à l'étape E503 et dans la négative le contrôleur Cont retourne à l'étape E502.

A l'étape E503, le contrôleur Cont calcule une moyenne Mᵢ des échantillons obtenus pendant le demi pas.

A l'étape E504, le contrôleur Cont vérifie si la différence entre la moyenne Mᵢ et une moyenne Mᵢ₋₁ est supérieure à un seuil prédéterminé Max. La moyenne Mᵢ₋₁ est la moyenne des échantillons obtenus pendant l'exécution d'un précédent demi pas.

Si la différence entre la moyenne Mᵢ et une moyenne Mᵢ₋₁ est supérieure au seuil prédéterminé Max, le contrôleur Cont passe à l'étape E506. Dans la négative, le contrôleur Cont passe à l'étape E505.

A l'étape E505, le contrôleur Cont met la valeur de la moyenne Mᵢ₋₁ à la valeur de la moyenne Mᵢ et retourne ensuite à l'étape E501.

A l'étape E506, le contrôleur Cont détermine qu'une des butées 31 ou 35 est détectée.

A l'étape E507, le contrôleur Cont vérifie si le sens de rotation du moteur est dans le sens IN.

Dans l'affirmative, le contrôleur Cont passe à l'étape E509. Dans la négative, le contrôleur Cont passe à l'étape E508.

A l'étape E508, le contrôleur Cont détermine que la butée 35 est détectée et passe à l'étape E510.

A l'étape E509, le contrôleur Cont détermine que la butée 31 est détectée et passe à l'étape E510.

A l'étape E510, le contrôleur Cont commande l'arrêt du moteur.

La Fig. 6 illustre schématiquement un exemple d'algorithme exécuté par un contrôleur selon la présente invention pour détecter la plage d'ouverture du conduit du corps de vanne.

Le présent algorithme est par exemple exécuté par le contrôleur Cont à partir de l'étape E404 de la Fig. 4.

Cet algorithme permet de détecter la plage d'ouverture du conduit du corps de vanne, c'est-à-dire la zone comprise entre les points 33 et 35 de la Fig.3.

A l'étape E600, le contrôleur Cont initialise les variables et des moyennes glissantes.

A l'étape E601, le contrôleur Cont commande le déplacement du moteur dans le sens OUT.

A l'étape suivante E602, le contrôleur Cont commande l'échantillonnage du signal représentatif de la force contre électromotrice pendant l'exécution du demi pas.

A l'étape suivante E603, le contrôleur Cont vérifie si le demi pas a été exécuté. Dans l'affirmative, le contrôleur Cont passe à l'étape E604 et dans la négative le contrôleur Cont retourne à l'étape E603.

A l'étape E604, le contrôleur Cont calcule une moyenne M'ᵢ des échantillons obtenus pendant le demi pas et une moyenne glissante Mg'ᵢ sur les 16 moyennes obtenues pour les 16 demi pas précédemment exécutés.

A l'étape E605, le contrôleur Cont calcule la valeur absolue de la différence entre la moyenne glissante Mg'ᵢ et la moyenne M'ᵢ des échantillons obtenus pendant le demi pas et vérifie si celle-ci est supérieure à une valeur prédéterminée notée Maxzone par exemple égale à 30.

Dans la négative, le contrôleur Cont retourne à l'étape E602.

Dans l'affirmative, le contrôleur Cont passe à l'étape E606.

A l'étape E606, la zone appelée zone 23 comprise entre les points 33 et 35 de la Fig.3 est mémorisée.

## Revendications

1. Procédé de paramétrage d'une tête thermostatique motorisée d'une vanne thermostatique pour le contrôle et la régulation d'une installation de chauffage domestique à circulation de fluide dans une pièce d'un bâtiment, la vanne thermostatique comportant un corps de vanne et la tête thermostatique motorisée, la tête thermostatique motorisée comportant un moteur pas à pas pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, **caractérisé en ce que** le procédé comporte les étapes de :
- commande (E405) de la rotation du moteur pas à pas d'un nombre de demi pas prédéterminé pour provoquer le déplacement de l'élément mobile du corps de vanne dans la totalité de la course de l'élément mobile dans le corps de vanne,
- mesure à chaque demi pas de la force contre électro motrice du moteur pas à pas,
- détection (E406) à partir des mesures de la force contre électro motrice du moteur pas à pas d'une butée qui correspond à une fermeture totale du conduit et ne laissant pas circuler de fluide dans le corps de vanne,
- détection (E411) à partir des mesures de la force contre électro motrice du moteur pas à pas d'une plage d'ouverture du conduit du corps de vanne, la plage d'ouverture du conduit du corps de vanne étant détectée en comparant la valeur absolue de la différence entre une moyenne glissante de mesures de la force contre électro motrice du moteur pas à pas pendant un nombre donné de demi pas et une moyenne de mesures de la force contre électro motrice du moteur pas à pas pendant un demi pas à un second seuil prédéterminé,
- utilisation (E411) de la butée qui correspond à une fermeture totale du conduit et de la plage d'ouverture du conduit du corps de vanne pour commander l'élément mobile.

2. Procédé selon la revendication 1, **caractérisé en ce que** le procédé comporte en outre les étapes de :
- commande de la rotation du moteur pas à pas d'un nombre de demi pas prédéterminé pour provoquer le déplacement du piston à une position dans laquelle le piston est totalement rentré dans la tête thermostatique motorisée,
- détection à partir des mesures de la force contre électro motrice du moteur pas à pas d'une butée qui correspond à la position dans laquelle le piston est totalement rentré dans la tête thermostatique motorisée.

3. Procédé selon la revendication 1 ou 2, **caractérisé en ce que** les butées sont détectées en comparant la différence entre la moyenne des mesures de la force contre électro motrice du moteur pas à pas pendant un demi pas et la moyenne des mesures de la force contre électro motrice du moteur pas à pas pendant un demi pas précédent à un premier seuil prédéterminé.

4. Dispositif de paramétrage d'une tête thermostatique motorisée d'une vanne thermostatique pour le contrôle et la régulation d'une installation de chauffage domestique à circulation de fluide dans une pièce d'un bâtiment, la vanne thermostatique comportant un corps de vanne et la tête thermostatique motorisée, la tête thermostatique motorisée comportant un moteur pas à pas pour déplacer un piston de la tête thermostatique, le déplacement du piston provoquant un déplacement d'un élément mobile du corps de vanne, l'élément mobile du corps de vanne laissant circuler en totalité ou en partie ou ne laissant pas circuler de fluide dans le corps de vanne, **caractérisé en ce que** le dispositif comporte :
- des moyens de commande de la rotation du moteur pas à pas d'un nombre de demi pas prédéterminé pour provoquer le déplacement de l'élément mobile du corps de vanne dans la totalité de la course de l'élément mobile dans le corps de vanne,
- des moyens de mesure à chaque demi pas de la force contre électro motrice du moteur pas à pas,
- des moyens de détection à partir des mesures de la force contre électro motrice du moteur pas à pas d'une butée qui correspond à une fermeture totale du conduit et ne laissant pas circuler de fluide dans le corps de vanne,
- des moyens de détection à partir des mesures de la force contre électro motrice du moteur pas à pas d'une plage d'ouverture du conduit du corps de vanne, la plage d'ouverture du conduit du corps de vanne étant détectée en comparant la valeur absolue de la différence entre une moyenne glissante de mesures de la force contre électro motrice du moteur pas à pas pendant un nombre donné de demi pas et une moyenne de mesures de la force contre électro motrice du moteur pas à pas pendant un demi pas à un second seuil prédéterminé,
- des moyens d'utilisation de la butée qui correspond à une fermeture totale du conduit et de la plage d'ouverture du conduit du corps de vanne pour commander l'élément mobile.

5. Produit programme d'ordinateur comportant des instructions pour implémenter, par un processeur, le procédé selon l'une quelconque des revendications 1 à 3, lorsque ledit programme est exécuté par ledit processeur.

6. Support de stockage d'informations stockant un programme d'ordinateur comprenant des instructions pour implémenter, par un processeur, le procédé selon l'une quelconque des revendications 1 à 3, lorsque ledit programme est lu et exécuté par ledit processeur.
